(19) Europäisches Patentamt

European Patent Office

Office européen des brevets

(11) **EP 1 091 312 A1**

(12) **DEMANDE DE BREVET EUROPEEN**

(43) Date de publication:
11.04.2001 Bulletin 2001/15

(51) Int. Cl.⁷: **G06K 7/00**, G06K 19/07

(21) Numéro de dépôt: 00125993.6

(22) Date de dépôt: 13.06.1996

(84) Etats contractants désignés:
DE IT

(30) Priorité: 22.06.1995 FR 9507514

(62) Numéro(s) de document de la (des) demande(s) initiale(s) en application de l'article 76 CBE:
96401291.8 / 0 750 276

(71) Demandeurs:
• FRANCE TELECOM
75015 Paris (FR)
• LA POSTE
F-92777 Boulogne Billancourt (FR)

(72) Inventeurs:
• Thorigne, Yves
14790 Verson (FR)
• Bouvier, Jacky
38240 Meylan (FR)

(74) Mandataire: Nicolle, Olivier
Cabinet Netter
40, rue Vignon
75009 Paris (FR)

Remarques:
Cette demande a été déposée le 28 - 11 - 2000 comme demande divisionnaire de la demande mentionnée sous le code INID 62.

(54) **Carte sans contact passive**

(57) La carte passive (CSC) comprend des moyens de couplage électromagnétique sans contact avec une station distante (SD) pour le transfert de données entre la carte (CSC) et la station (SD). La carte reçoit l'énergie par le couplage électromagnétique avec la station distante. La station transmet un signal haute fréquence qui permet simultanément la transmission de l'énergie et des données à la carte. La carte comprend en outre des moyens de démodulation d'amplitude, avec un taux de démodulation de 10 % pour les données. La station comprend en outre des moyens de modulation d'amplitude du signal haute fréquence, avec un taux de modulation de 10 % pour les données.

FIG.2

**Description**

La présente invention concerne une carte sans contact passive, et une station destinée à être électromagnétiquement couplée avec une telle carte sans contact passive.

Elle trouve une application générale dans le transfert uni- ou bidirectionnel de données entre une carte sans contact passive et une station distante.

D'une manière générale, une carte sans contact contient ou non une source d'énergie interne. Dans le premier cas, il s'agit d'une carte active, tandis que dans le second cas, il s'agit d'une carte passive.

La carte sans contact passive reçoit, par couplage électromagnétique, l'énergie dont elle a besoin, de la station distante. Elle est dite de proximité dans la mesure où sa distance de fonctionnement avec la station est généralement inférieure ou égale à quelques millimètres.

En pratique, une carte sans contact passive supporte un composant micro-électronique comprenant une bobine (appelée encore antenne ou self inductance) pour l'alimentation par induction du composant et pour le transfert inductif avec la station d'un signal représentatif de données. Des moyens de traitement, alimentés par ladite bobine, sont propres à traiter ledit signal ainsi transféré ou à transférer.

La station transmet à la carte un signal haute fréquence qui permet la transmission de l'énergie de la station à la carte. Ce signal haute fréquence est modulé en amplitude pour la transmission des données à la carte.

La Demanderesse s'est posée le problème de fournir un résultat optimal pour le transfert d'énergie de la station à la carte et pour la transmission des données à la carte.

La présente invention apporte une solution à ce problème.

Elle porte sur une carte passive comprenant des moyens de couplage électromagnétique sans contact avec une station distante pour le transfert de données entre la station et la carte, la carte recevant l'énergie par le couplage électromagnétique avec la station distance, ladite station étant apte à transmettre un signal haute fréquence qui permet simultanément la transmission de l'énergie et des données à la carte.

Selon une définition générale de l'invention, la carte comprend en outre des moyens de démodulation d'amplitude, avec un taux de démodulation de 10 % pour les données.

Un tel taux de démodulation a l'avantage de fournir un résultat optimal pour le transfert d'énergie et la transmission des données de la station à la carte.

La présente invention a également pour objet une station qui comprend des moyens de couplage électromagnétique sans contact avec une carte pour le transfert de données entre la station et la carte, ladite carte recevant l'énergie par le couplage électromagnétique avec la station distante et ladite station étant apte à transmettre un signal haute fréquence qui permet simultanément la transmission de l'énergie et des données à la carte.

Selon une autre caractéristique importante, inhérente au taux de démodulation d'amplitude de 10 % par les données au niveau de la carte, la station comprend en outre des moyens de modulation d'amplitude du signal haute fréquence, avec un taux de modulation de 10 % pour les données.

D'autres caractéristiques et avantages de l'invention apparaîtront à la lumière de la description détaillée ci-après et des dessins annexés dans lesquels :

- la figure 1 est une vue schématique du couplage inductif d'une station distante et d'une carte sans contact passive ;

- la figure 2 est un synoptique des moyens essentiels de la station destinée à être couplée électromagnétiquement avec le composant de la carte sans contact selon l'invention ;

- la figure 3 est un schéma équivalent d'une partie des moyens essentiels du composant selon l'invention ;

- la figure 4 est une vue de dessus d'un circuit intégré selon l'invention, comprenant les spires d'une self inductance plane imprimée ou réalisée par photolithographie ; et

- la figure 5 est une représentation schématique du tracé des spires du circuit intégré de la figure 4 ;

- la figure 6 est une vue en coupe transversale du composant à trois niveaux de métallisation selon l'invention ; et

- la figure 7 est un organigramme illustrant le choix de la largeur des spires de la bobine intégrée et de leur nombre selon l'invention.

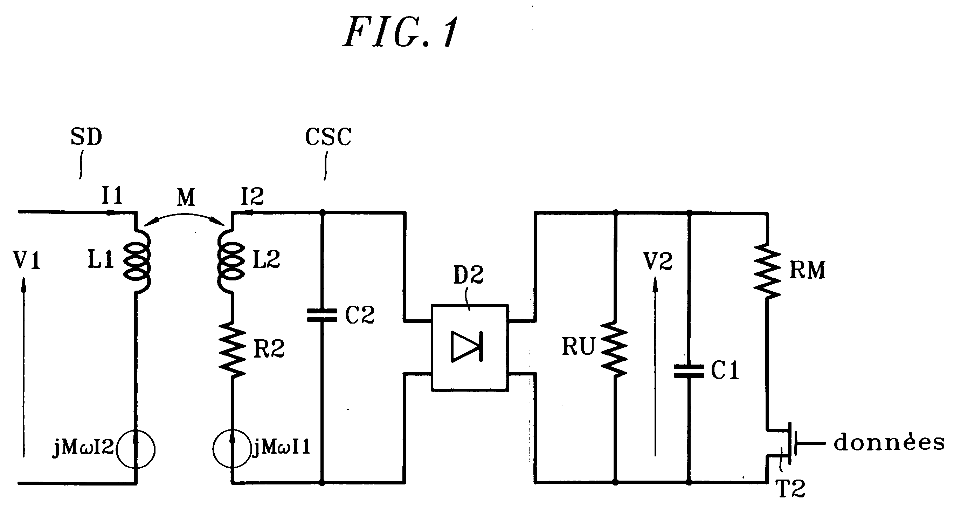

En référence à la figure 1, l'antenne L1 de la station distante SD, est couplée électromagnétiquement à l'inductance (ou bobine) L2 de la carte sans contact passive CSC. L'antenne L1 est réalisée sous la forme d'un bâtonnet, ou d'un tore avec entrefer, en matériau magnétique sur lequel sont enroulées plusieurs spires parcourues par un courant I1. L'inductance L2 est constituée d'un ensemble de spires, gravées dans le composant de la carte, comme on le décrira plus en détail ci-après. Le courant I2 parcourt les spires de la bobine intégrée L2.

Le couplage inductif se définit par la mutuelle inductance, M, entre les circuits L1 et L2. Le couplage est matérialisé par les deux générateurs de tension jMwI2, côté station, délivrée aux bornes de l'antenne L1, et jMwI1, côté carte, délivrant la tension V2 aux bornes de l'inductance L2. Le circuit de la carte est caractérisé par l'inductance L2, le condensateur de l'antenne C2 et la résistance de perte R2. La tension induite V2 dans l'inductance L2 est redressée par un pont redresseur D2, puis est filtrée par un condensateur de lissage CL.

La résistance RU, montée en parallèle avec le condensateur de lissage CL, représente ici la résistance de charge équivalente, c'est à dire l'ensemble des circuits électroniques du composant dont la consommation serait équivalente à celle de RU.

La résistance RM représente la résistance de modulation de charge que l'on décrira plus en détail ci-après.

Le transistor T2 est ou n'est pas passant au rythme des données envoyées par le composant vers la station distante.

Comme on le verra plus en détail ci-après, les valeurs numériques des éléments du composant sont choisies selon une loi prédéterminée selon l'invention. En pratique, la résistance RU est de l'ordre de 9 KOhms, la tension continue V2 est de l'ordre de 3 Volts, et la puissance disponible sur le composant est de l'ordre de 1 mWatts.

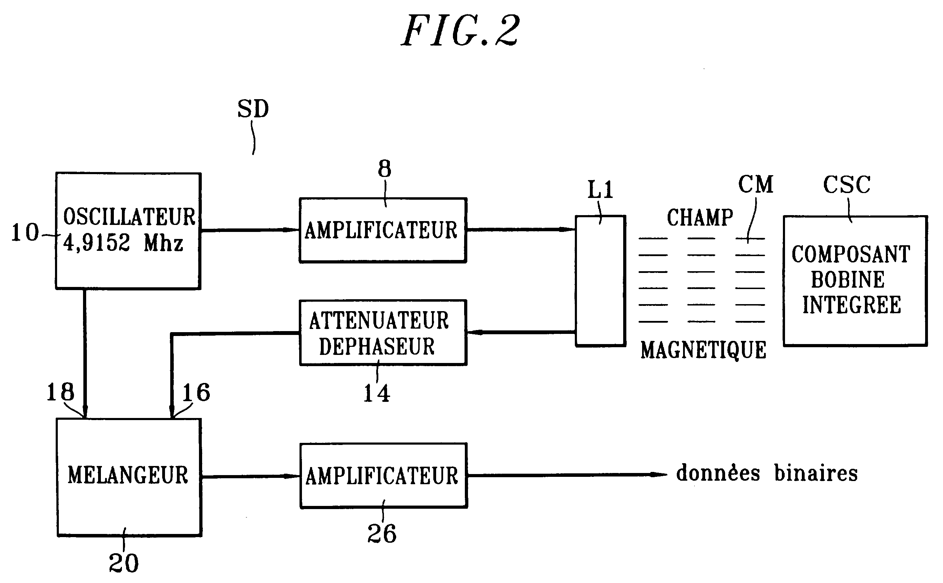

Sur la figure 2, la carte sans contact passive CSC est couplée électromagnétiquement à la station distante SD, à travers un champ magnétique CM par exemple de l'ordre de 5 Gauss ou plus. La station distante assure les fonctions d'alimentation et d'échange de données avec la carte sans contact passive. En fonctionnement, la carte sans contact est espacée d'une distance de l'ordre 2 mm du solénoïde L1 de la station, et dans l'axe de celui-ci.

Un oscillateur 10 délivre un signal alternatif, haute fréquence F1 au solénoïde L1, à travers des moyens d'amplification 8.

Par exemple, la fréquence F1 de l'oscillateur est de 4,9152 - Mhz.

En pratique, le solénoïde L1 est réalisé sur un mandrin, avec un noyau magnétique. Il est constitué de 16 spires d'une longueur respective de 9 mm et d'un diamètre respectif de 9 mm. Il est à remarquer que le signal haute fréquence F1 permet de transmettre simultanément l'énergie, l'horloge et les données au composant CSC.

Un réseau atténuateur-déphaseur 14 est prévu pour recevoir le signal transmis par la carte. Ce réseau atténuateur-déphaseur 14 adapte le niveau d'entrée, voisin de 120 V, crête à crête, aux bornes du solénoïde L1, à une quarantaine de millivolts crête à crête, ce qui correspond à une atténuation de 70 dB. Par exemple, le réseau atténuateur-déphaseur 14 comprend un réseau capacitif diviseur par 100, puis un réseau LRC atténuateur et déphaseur de façon à présenter le signal en phase avec le signal émanant de l'oscillateur 10 à la fréquence F1, à savoir 4,9152 Mhz.

Un mélangeur 20 comprend une entrée 16, pour recevoir le signal issu de l'atténuateur 14, et une entrée 18, pour recevoir le signal issu de l'oscillateur 10.

Le mélangeur 20 présente un gain de conversion de l'ordre de 16 dB.

Un amplificateur 26 est placé à la sortie du mélangeur 20. Cet amplificateur 26 a un gain de 80 dB et une bande passante de 50 Khz. Il est constitué de trois cellules, la première est un filtre passif RC adapté en impédance par rapport à la sortie du mélangeur. Les deux cellules suivantes sont constituées d'un amplificateur opérationnel de 40 dB chacune avec une bande passante de 50 Khz. Le premier amplificateur opérationnel est monté en montage inverseur, tandis que le second est monté en non-inverseur pour des raisons de stabilité.

Des moyens de remise en forme (non représentés) sont connectés à la sortie des moyens amplificateurs pour remettre en forme les données ainsi reçues, en données binaires.

Nous faisons de nouveau référence à la figure 1.

La transmission des données du composant vers la station met en oeuvre le principe de la modulation de charge. En bref, il s'agit de faire varier la charge présente aux bornes de l'alimentation.

La résistance de charge varie entre RU (transistor non passant) et RU.RM/RU+RM (transistor passant).

Le coefficient de surtension du solénoïde L1 varie en fonction de la puissance dissipée par le composant. La tension V1 présente aux bornes du solénoïde présente alors une légère variation. La modulation de charge se traduit, aux bornes du solénoïde L1, par une modulation d'amplitude. En pratique, pour une résistance de modulation égale à 16 Kohms, l'indice de modulation est, ici, de l'ordre de 0,2% .

La transmission de données dans le sens composant vers station est de l'ordre de 9,6 Kbits/s.

Par ailleurs, la tension de forme sinusoïdale, disponible aux bornes de l'inductance L2, permet avec des moyens de récupération d'horloge, de générer plusieurs horloges, elles-mêmes nécessaires au fonctionnement des circuits logiques du composant.

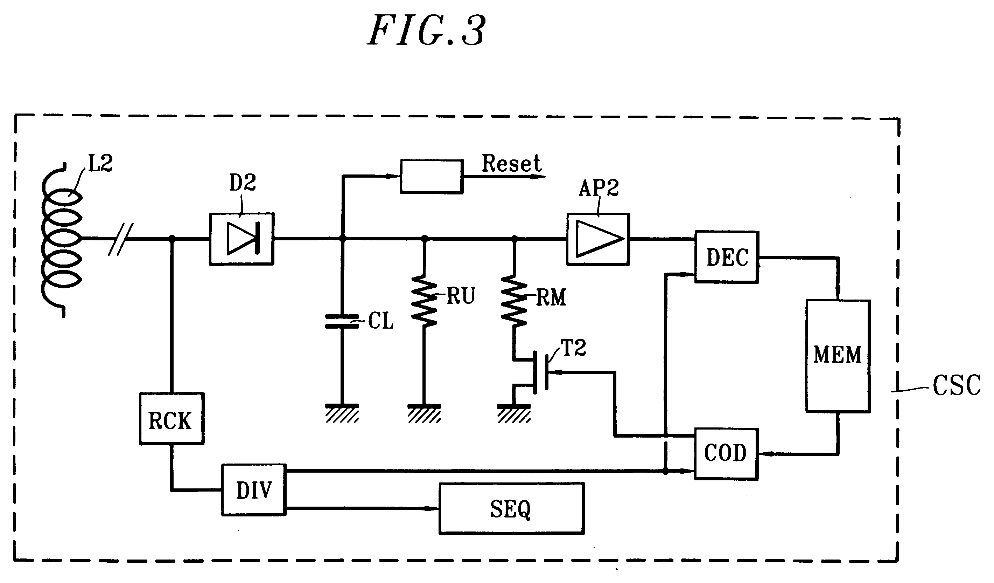

En référence à la figure 3, des moyens de récupération d'horloge RCK sont disposés à la sortie de l'inductance L2 pour remettre en forme la tension alternative, sinusoïdale, présente aux bornes de l'inductance L2. Les moyens RCK génèrent alors un signal logique de fréquence 4,9152 Mhz.

Des moyens diviseurs DIV sont reliés aux moyens de récupération d'horloge RCK pour diviser le signal logique à une fréquence appropriée. Par exemple, les moyens diviseurs divisent la fréquence ainsi récupérée par 32, pour obtenir une fréquence à 153,6 Khz, destinée à cadencer un séquenceur SEQ.

Les moyens diviseurs DIV divisent aussi le signal logique ainsi récupéré, par 512, pour obtenir une fréquence de 9600 Hz, destinée à cadencer des moyens de codage COD et de décodage DEC que l'on décrira plus en détail ci-après.

La transmission des données de la station vers le composant est basée sur la modulation d'amplitude du signal. Au niveau du composant, la démodulation est réalisée par le pont redresseur D2 et l'ensemble constitué par la résistance de charge RU et le condensateur de lissage CL.

Avantageusement, après suppression de la composante continue, le signal démodulé d'amplitude, par exemple 0,3 Volts avec un taux de démodulation de 10% et une tension d'alimentation de 3 Volts, est amplifié par des moyens amplificateurs AP2 de façon à générer un signal aux niveaux logiques. Ces moyens amplificateurs AP2 suppriment en outre la composante continue du signal égal à V2, avant amplification, pour n'amplifier que le signal, avantageusement codé de type Manchester.

Le codage d'information, est de préférence de type Manchester, c'est-à-dire que l'état logique O est codé en ligne par la succession de deux éléments binaires, 1 suivi de 0, tandis que l'état logique 1 est codé par le doublet 01. Le débit binaire est ici deux fois plus élevé que le débit d'informations. Ce codage d'information a l'avantage d'améliorer la transmission des informations par la suppression de la composante continue.

Les données binaires sont mémorisées dans des registres MEM. Les données transmises par la station sont décodées par des moyens de décodage Manchester DCC avant mémorisation. Au contraire, les données à transmettre vers la station, sont codées par des moyens de codage COD avant envoi via le transistor T2. Une fonction de RESET est également disponible pour initialiser correctement les éléments logiques du composant.

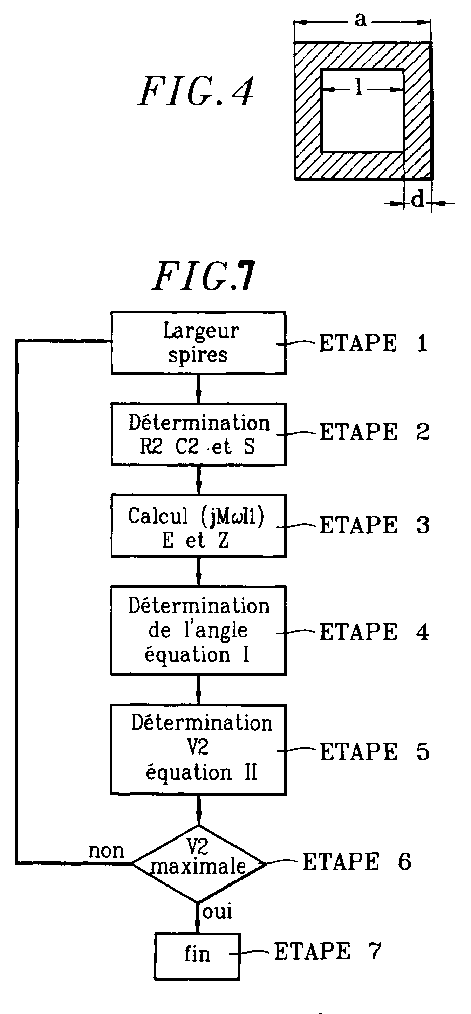

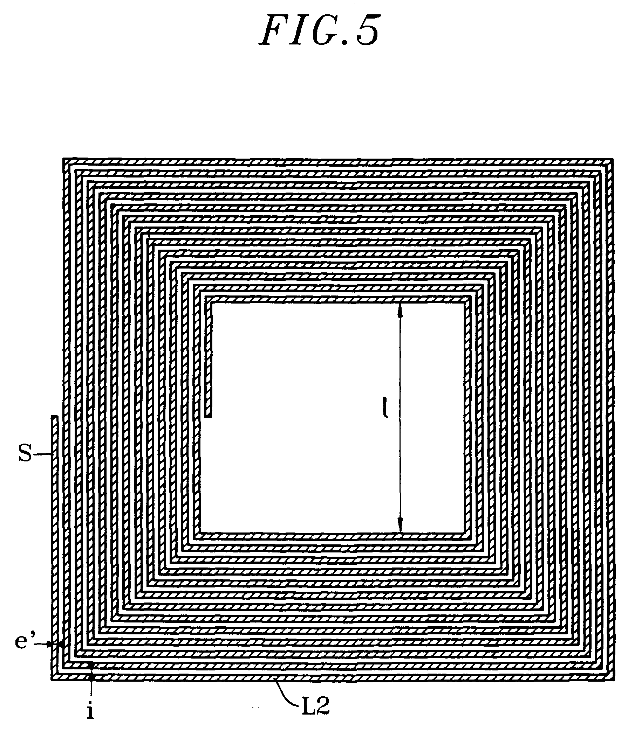

En référence aux figures 4 et 5, la self inductance L2 est réalisée par métallisation sur le pourtour du composant sensiblement inoccupé par les moyens de traitement, et autour desdits moyens de traitement capables d'assurer le transfert bidirectionnel des données. Cette inductance constitue un dipôle magnétique formé de plusieurs spires juxtaposées et enroulées conformément au tracé représenté en figure 5. Les spires sont non jointives. La distance i entre deux spires adjacentes est appelée isolement. Le pas des spires e est égal à la somme de l'isolement i et de la largeur d'une spire e'. Par exemple, le pas e est égal à 8 μm avec e' = 6 μm et i = 2 μm. Le nombre de spires, ainsi que leur largeur sont définis selon plusieurs critères. L'un des critères principaux est le rendement de la télé-alimentation. Un autre correspond à la surface disponible sur le composant ainsi que la variation de la tension lors du transfert des données.

En premier lieu, le rendement de la télé-alimentation doit permettre l'obtention d'une tension induite V2 ayant une valeur suffisante pour alimenter les éléments logiques du composant.

En second lieu, la variation de la tension ΔV2 lors de la modulation de charge (c'est-à-dire lors de la transmission des données du composant vers la station ou réciproquement) doit être faible, de façon à ne pas perturber le fonctionnement des circuits logiques du composant.

En troisième lieu, la surface S disponible pour la gravure des spires de l'inductance L2 sur le composant doit être suffisamment grande pour générer la tension induite V2 choisie et suffisamment petite pour réduire les coûts de production du composant.

L'optimisation du choix de ces paramètres s'effectue selon le procédé décrit en référence à la figure 7.

Tout d'abord, on choisit les paramètres physiques du composant, c'est-à-dire sa surface et le nombre de niveaux de métallisation des spires. Par exemple, le composant présente une surface de 8 mm$^2$, de forme carrée, avec a = 2,83 mm, l = 1,7 mm, et d = 0,565 mm. Le nombre de métallisations est ici égal à 1.

Ensuite, on fait varier, selon une boucle, la largeur des spires, jusqu'à l'obtention d'une tension V2 optimale, c'est-à-dire la plus élevée possible, et d'une variation ΔV2 optimale, c'est-à-dire la plus petite possible (étape 1).

Pour cela, on détermine tout d'abord, la valeur des paramètres R2, C2 et S (étape 2).

La résistance R2 est donnée par l'équation (I) en annexe.

La surface S est donnée par l'équation (II) en annexe.

A partir de R2 et S, on calcule la valeur de $(jM\omega\ I1)_{crête}$ qui est proportionnelle à la somme des surfaces des spires (étape 3).

Il convient alors de déterminer la valeur du condensateur C2, par exemple par l'utilisation d'un logiciel de simulation électrique. La connaissance de C2 permet de calculer les valeurs de E (équation III en annexe) et Z (équation IV en annexe) (étape 3).

Ces deux valeurs E et Z sont ensuite reportées dans l'équation V en annexe (étape 4).

Enfin, la connaissance de l'angle θ1 de conduction des moyens de redressement D2 permet de calculer la tension V2 selon l'équation VI en annexe.

Cette démarche est faite pour différentes largeurs de spires, afin de déterminer la valeur maximale de V2.

Dans un premier mode de réalisation dans lequel le composant est de forme carrée avec une surface égale à 8 mm$^2$, où la longueur a est égale à 2,83 mm et la largeur interne l est égale à 1,7 mm avec une largeur totale d des spires de l'ordre de 0,565 mm, la bobine et la self inductance occupent une surface sensiblement égale à 60% de la surface totale du composant. Dans ce cas de figure, la bobine est réalisée sur un seul niveau de métallisation.

Les Demandeurs ont observé que les valeurs optimales correspondent à un composant présentant une tension V2 égale à 2,7 V, un angle θ1 égal à 52,4°, une surface S égale à 367 mm$^2$, une résistance R2 égale à 3,46 KOhms, un nombre de spires n égal à 69, une largeur e' égale à 6 μm et une induction égale à 5,6 Gauss.

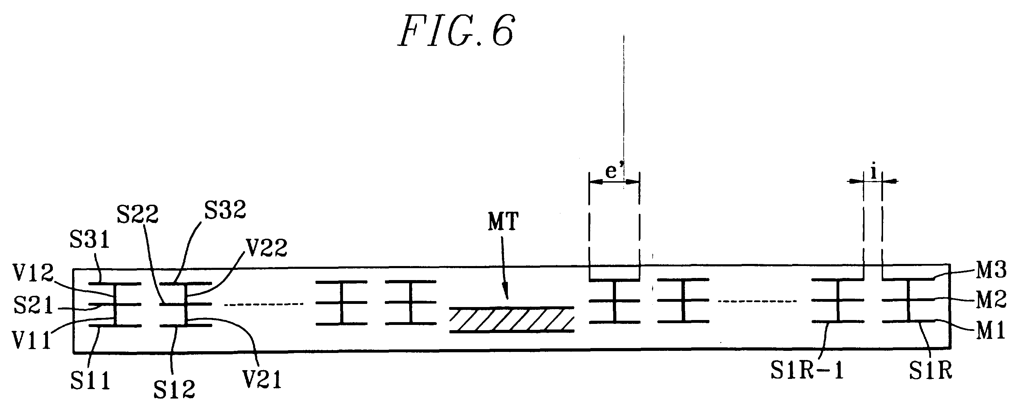

Dans un autre mode de réalisation (figure 6), les Demandeurs ont réalisé les spires de la self inductance sur trois niveaux de métallisation selon la filière 0,5 μ. Le composant comprend une surface carrée de 4 mm$^2$. Dans ces conditions, la self inductance occupe une surface égale à 3,5 mm$^2$ ce qui correspond à une occupation de l'ordre de 87% de la surface totale du composant.

Sur la figure 6, les niveaux de métallisation sont individualisés en M1 à M3, et les spires sont individualisées en Smj avec m nombre entier variant de 1 à 3, j nombre entier variant de 1 à R et m x j = n . En présence de plusieurs niveaux de métallisation, les spires sont superposées les unes sur les autres avec un espace d'une épaisseur déterminée entre les unes et les autres.

Sur chaque niveau, les spires sont enroulées conformément sensiblement au tracé décrit en référence à la figure 5.

Les spires du niveau M1 peuvent être connectées en série à celles du niveau M2, ces dernières pouvant être connectées aux spires de niveau M3.

Toutefois, dans un montage en série, la capacité entre spires réduit de façon très significative le rendement de la téléalimentation.

Selon l'invention, en référence à la figure 6, les spires sont avantageusement court-circuitées entre elles. L'enroulement en parallèle des spires réduit ici la valeur de la capacité de l'antenne. En effet, la capacité entre spires est annulée et seule la capacité entre les spires du niveau M1 et le substrat subsiste. Cette réduction assure une nette augmentation du rendement de la téléalimentation.

Par exemple, les courts-circuits entre spires sont réalisés par des vias métallisés V individualisés par exemple en V11 pour le via disposé entre la première spire de niveau M1 individualisée en S11 et la première spire de niveau M2 individualisée en S21.

**ANNEXE**

$$(I) \quad R2 = [\; 4\,n\, \frac{l}{e'} + 4\,n\,(n{+}1)\, \frac{e}{e'}\,]\; x\; Rcarrée$$

avec n =         nombre de spires

e' =         largeur des spires

e =         pas des spires   e' + i

Rcarrée = résistance carrée de la métallisation.

$\ell$ =         longueur du côté de la spire intérieure de forme carrée

$$(II) \quad S = nl^2 + 2\,le\; x\; n\,(n{+}1) + \frac{4e^2}{6}\; x\; n(n{+}1)\,(2n{+}1)$$

$$(III) \quad E = (jM\omega I1)_{crête}\; \left(\frac{1}{1+jR2C2\omega}\right)$$

$$(IV) \quad |Z| = \frac{R2}{\sqrt{1+(R2C2\omega)^2}}$$

$$(V) \quad -V_P = |E|_{crête}\; x\; [2\sin\theta1\; x\; \frac{RU}{\pi|Z|} - \cos\theta1\,(2\theta1\; x\; \frac{RU}{\pi|Z|}+1)]$$

$$(VI) \quad V2 = |E|\; x\; \cos\theta1 - Vp$$

**Revendications**

1.  Carte passive comprenant des moyens de couplage électromagnétique sans contact avec une station distante (SD) pour le transfert de données entre la station (SD) et la carte (CSC), la carte recevant l'énergie par le couplage électromagnétique avec la station distante (SD), ladite station étant apte à transmettre un signal haute fréquence qui permet simultanément la transmission de l'énergie et des données à la carte, caractérisée en ce que la carte comprend en outre des moyens de démodulation d'amplitude, avec un taux de démodulation de 10 % pour les données.

2.  Station comprenant des moyens de couplage électromagnétique sans contact avec une carte (CSC) pour le transfert de données entre la station (SD) et la carte (CSC), ladite carte recevant l'énergie par le couplage électromagnétique avec la station distante (SD), ladite station étant apte à transmettre un signal haute fréquence qui permet simultanément la transmission de l'énergie et des données à la carte, caractérisée en ce que la station comprend en outre des moyens de modulation d'amplitude du signal haute fréquence avec un taux de modulation de 10 % pour les données.

# FIG.1

EP 1 091 312 A1

## FIG.2

OSCILLATEUR 4,9152 Mhz — 10

SD

AMPLIFICATEUR — 8

L1

CHAMP MAGNETIQUE — CM

COMPOSANT BOBINE INTEGREE — CSC

ATTENUATEUR DEPHASEUR — 14

MELANGEUR — 20

AMPLIFICATEUR — 26

18

16

données binaires

EP 1 091 312 A1

## FIG.3

EP 1 091 312 A1

*FIG.4*

*FIG.7*

| | |
|---|---|
| Largeur spires | ETAPE 1 |
| Détermination R2 C2 et S | ETAPE 2 |
| Calcul (jMωI1) E et Z | ETAPE 3 |
| Détermination de l'angle équation I | ETAPE 4 |
| Détermination V2 équation II | ETAPE 5 |
| V2 maximale | ETAPE 6 |
| fin | ETAPE 7 |

non

oui

# FIG.5

EP 1 091 312 A1

# FIG.6

Office européen
des brevets

**RAPPORT DE RECHERCHE EUROPEENNE**

Numéro de la demande

EP 00 12 5993

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 374 930 A (SCHUERMANN JOSEF H) 20 décembre 1994 (1994-12-20) * colonne 2, ligne 9 - colonne 2, ligne 41 * | 1,2 | G06K7/00 G06K19/07 |
| A | WO 93 05489 A (INTEGRATED SILICON DESIGN PTY) 18 mars 1993 (1993-03-18) * page 24, ligne 6 - ligne 17; figure 10B * | 1,2 | |

| | | | DOMAINES TECHNIQUES RECHERCHES (Int.Cl.7) |
|---|---|---|---|
| | | | G06K |

Le présent rapport a été établi pour toutes les revendications

| Lieu de la recherche | Date d'achèvement de la recherche | Examinateur |
|---|---|---|
| LA HAYE | 14 février 2001 | Chiarizia, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**          EP 00 12 5993

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-02-2001

| Document brevet cité au rapport de recherche | Date de publication | Membre(s) de la famille de brevet(s) | | Date de publication |
|---|---|---|---|---|
| US 5374930 A | 20-12-1994 | US | 5287112 A | 15-02-1994 |
| | | DE | 69426014 D | 02-11-2000 |
| | | EP | 0674298 A | 27-09-1995 |
| | | JP | 7131376 A | 19-05-1995 |
| WO 9305489 A | 18-03-1993 | AT | 180084 T | 15-05-1999 |
| | | AU | 674498 B | 02-01-1997 |
| | | DE | 69229176 D | 17-06-1999 |
| | | EP | 0603279 A | 29-06-1994 |
| | | US | 5689239 A | 18-11-1997 |